# EUROPÄISCHE PATENTSCHRIFT

(11) **EP 0 604 367 B1**
(45) Veröffentlichungstag und Bekanntmachung des Hinweises auf die Patenterteilung: **29.01.1997**
(21) Anmeldenummer: 93810878.4
(22) Anmeldetag: 14.12.1993
(51) Int. Cl.: C08G 69/48, C08K 5/5333, C08L 77/00, C08G 81/02

(54) **Molekulargewichtserhöhung von Polyamiden**
Molecular weight increasing of polyamides
Accroissement du poids moléculaire de polyamides

(30) Priorität: 22.12.1992 CH 3939/92
(43) Veröffentlichungstag der Anmeldung: 29.06.1994
(73) Patentinhaber: Ciba SC Holding AG, 4057 Basel (CH)
(72) Erfinder: Pfaendner, Rudolf, Dr., D-64668 Rimbach/Odenwald 1 (DE); Herbst, Heinz, Dr., D-64686 Lautertal-Reichenbach (DE); Hoffmann, Kurt, Dr., D-64686 Lautertal 1 (DE)

(56) Entgegenhaltungen:
- EP-A- 0 353 969
- US-A- 5 116 919
- US-A- 5 142 000

## Beschreibung

Die Erfindung betrifft ein Verfahren zur Molekulargewichtserhöhung von Polyamiden sowie die nach dem Verfahren erhältlichen Polyamide.

Polyamide sind wichtige thermoplastische Werkstoffe aus der Gruppe der technischen Kunststoffe mit hoher Festigkeit, Steifigkeit, Härte und Wärmeformbeständigkeit. Diese mechanischen und physikalischen Eigenschaften hängen entscheidend vom Molekulargewicht des Polymeren ab. Eine hochwertige Wiederverwertung von gebrauchten Polyamiden und von Produktionsabfällen z.B. aus der Faserproduktion und dem Spritzgiessbereich ist aufgrund reduzierten Molekulargewichts ohne eine Nachbehandlung nur eingeschränkt möglich.

Eine Verbesserung der Materialeigenschaften von gebrauchten beziehungsweise thermisch oder hydrolytisch vorgeschädigten Polyamiden, wobei die Schädigung typischerweise mit einer Molekulargewichtserniedrigung einhergeht, ist grundsätzlich bekannt. Als Polykondensationsprodukte sind Polyamide beispielsweise einer Nachkondensation im festen Zustand zugänglich (S. Fakirov, Kunststoffe 74 (1984), 218 und R.E. Grützner, A. Koine, Kunststoffe 82 (1992), 284). Diese Methode ist jedoch langwierig und reagiert darüber hinaus empfindlich auf Verunreinigungen, wie sie in Altmaterial zugegen sein können.

Aufgabe der vorliegenden Erfindung war daher die Entwicklung eines Verfahrens, das eine wesentliche Molekulargewichtserhöhung von Polyamiden in verhältnismässig kurzer Zeit erlaubt.

Überraschenderweise gelingt durch Aufschmelzen und durch Zusatz eines Gemisches mindestens eines mehrfunktionellen Epoxidharzes und eines sterisch gehinderten Hydroxyphenyl-alkyl-phosphonsäureesters bzw. -halbesters zu Polyamid eine wesentliche Molekulargewichtserhöhung des Polyamids. Diese Molekulargewichtserhöhung bewirkt eine Eigenschaftsverbesserung der Polyamide, insbesondere im Spritzgiessbereich und bei Recyclaten.

Gegenstand der Erfindung ist somit ein Verfahren zur Molekulargewichtserhöhung von Polyamiden, dadurch gekennzeichnet, dass man ein Polyamid unter Zusatz eines mehrfunktionellen Epoxidharzes und eines sterisch gehinderten Hydroxyphenyl-alkylphosphonsäureesters bzw. -halbesters oberhalb des Schmelzpunktes (Glaspunktes) des Polyamids erhitzt sowie Mischungen dieser Bestandteile bzw. so hergestellte Polyamide.

Unter Polyamiden sind aliphatische und aromatische Polyamide oder Copolyamide, die sich von Diaminen und Dicarbonsäuren und/oder von Aminocarbonsäuren oder den entsprechenden Lactamen ableiten, zu verstehen. Die in Frage kommenden Monomeren weisen vorzugsweise 6-12 C-Atome auf. Geeignete Polyamide sind beispielsweise: PA 6, PA 11, PA 12, PA 66, PA 69, PA 610, PA 612, sowie auch amorphe Polyamide vom Typ Trogamid PA 6-3-T und Grilamid TR 55. Polyamide der genannten Art sind allgemein bekannt und im Handel erhältlich.

Besondere Bedeutung erlangt die Erfindung bei Polyamid-Recyclaten, wie sie bei Produktionsabfällen, Wertstoffsammlungen oder durch sogenannte Rücknahmeverpflichtungen z.B. bei der Automobilindustrie oder im Elektrobereich gewonnen werden. Die Polyamid-Recyclate sind dabei in vielfältiger Weise thermisch und/oder hydrolytisch geschädigt. Dabei kann es sich grundsätzlich um die bereits angegebenen Polyamide handeln; es können aber auch, bedingt durch die Art der Sammlung, Gemische beispielsweise von Polyamid-6 und Polyamid-6.6 eingesetzt werden. Ausserdem können diese Recyclate auch in untergeordneten Mengen Beimischungen von Kunststoffen anderer Struktur wie beispielsweise Styrolpolymere (ABS, ASA) oder Polyester enthalten, sowie auch übliche Verunreinigungen wie z.B. Lackreste, Metallspuren, Treibstoffreste oder auch Wasserspuren.

Vorzugsweise werden als Polyamide PA 6 und PA 6.6 oder ihre Mischungen, sowie Recyclate auf dieser Basis eingesetzt.

Mehrfunktionelle Epoxidharze können eine aliphatische, aromatische, cycloaliphatische, araliphatische oder heterocyclische Struktur haben; sie enthalten Epoxidgruppen als Seitengruppen oder diese Gruppen bilden einen Teil eines alicyclischen oder heterocyclischen Ringsystems. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidharze dieser Typen sind allgemein bekannt und im Handel erhältlich.

Die Epoxidharze enthalten wenigstens zwei Reste der Formel I 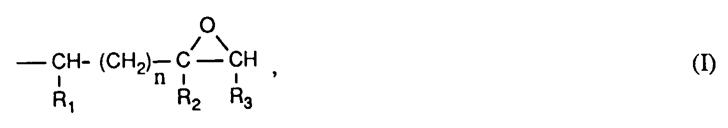 wobei diese Reste direkt an Sauerstoff-, Stickstoff- oder Schwefelatome gebunden sind, worin R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist.

Beispielhaft für Epoxidharze sind zu erwähnen:
I) Polyglycidyl- und Poly-(β-methylglycidyl)-ester erhältlich durch Umsetzung einer Verbindung mit mindestens zwei Carboxylgruppen im Molekül und Epichlorhydrin bzw. Glycerindichlorhydrin bzw. β-Methyl-epichlorhydrin. Die Umsetzung erfolgt zweckmässig in der Gegenwart von Basen.
   Als Verbindungen mit mindestens zwei Carboxylgruppen im Molekül können aliphatische Polycarbonsäuren verwendet werden. Beispiele für diese Polycarbonsäuren sind Glutarsäure, Adipinsäure, Pimelinsäure, Korksäure, Azelainsäure, Sebazinsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure, Trimellitsäure oder Pyromellitsäure.
   Ebenfalls können auch carboxylterminierte Addukte, z.B. von Trimellitsäure und Polyolen, wie beispielsweise Glycerin oder 2,2-Bis-(4-hydroxycyclohexyl)-propan verwendet werden.
II) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.
   Ether dieses Typs leiten sich beispielsweise ab von acyclischen Alkoholen, wie Ethylenglykol, Diethylengykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistdmethylolpropan, Pentaerythrit, Sorbit, sowie von Polyepichlorhydrinen.
   Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxy-cyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
   Die Epoxidharze können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan (Bisphenol A), 2,2-Bis-(3,5-dibrom-4-hydroxyphenyl)-propan, 4,4'-Dihydroxydiphenylsulfon, 4,4'-Dihydroxybiphenyl, 2,2'-Dihydroxybiphenyl, einem Gemisch von Bis-(hydroxyphenyl)methanen (Bisphenol F) oder 9,9-Bis(4-hydroxyphenyl)fluoren oder auf unter sauren Bedingungen erhaltene Kondensationsprodukte von Phenolen mit Formaldehyd wie Phenol-Novolake.
III) Poly-(N-glycidyl)-Verbindungen sind beispielsweise erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
   Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.
IV) Beispiele für Poly-(S-glycidyl)-Verbindungen sind Di-S-glycidylderivate, die sich von Dithiolen, wie beispielsweise Ethan-1,2-dithiol oder Bis-(4-mercaptomethylphenyl)-ether ableiten.
V) Beispiele für Epoxidharze mit einem Rest der Formel I, worin R₁ und R₃ zusammen -CH₂-CH₂- bedeuten und n 0 ist, sind Bis-(2,3-epoxicyclopentyl)-ether, 2,3-Epoxicyclopentylglycidylether oder 1,2-Bis-(2,3-epoxicyclopentyloxy)-ethan. Ein Epoxidharz mit einem Rest der Formel I, worin R₁ und R₃ zusammen -CH₂-CH₂- sind und n 1 bedeutet, ist beispielsweise 3,4-Epoxi-6-methyl-cyclohexancarbonsäure-(3',4'-epoxi-6'-methyl-cyclohexyl)-methylester.

Vorzugsweise finden Epoxidharze mit zwei funktionellen Gruppen Verwendung. Es können aber auch prinzipiell Epoxidharze mit drei oder mehr funktionellen Gruppen eingesetzt werden. Hierbei wird man jedoch mit vergleichsweise niedrigen Zusatzkonzentrationen arbeiten, um eine Vernetzung des Polyamids zu vermeiden.

Vorwiegend werden Diglycidylverbindungen mit aromatischen Strukturen eingesetzt.

Bevorzugt sind ferner aromatische Epoxidharze mit 2, 3 oder 4 Glycidylgruppen.

Gegebenenfalls kann auch ein Gemisch von Epoxidharzen unterschiedlicher Struktur eingesetzt werden.

Besonders bevorzugt sind als mehrfunktionelle Epoxidharze Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F), 4,4'-Dihydroxybiphenyl oder 9,9-B is(4-hydroxyphenyl)fluoren.

Ganz besonders bevorzugt sind feste Epoxidharze vom Bisphenol-A-diglycidylether-Typ, z.B.: Araldit® GT 6071, GT 7071, GT 7072, GT 6097 und GT 6099.

Sterisch gehinderte Hydroxyphenyl-alkyl-phosphonsäureester bzw. -halbester sind beispielsweise aus US 4,778,840 bekannt. Sie können durch die folgende Formel beschrieben werden: 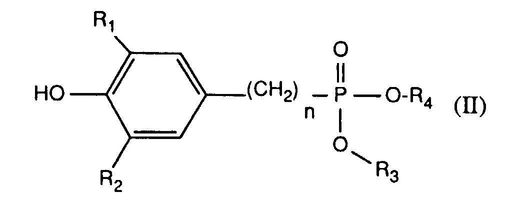 worin
R₁ iso-Propyl, tert.-Butyl, Cyclohexyl oder mit 1-3 C₁-C₄-Alkylgruppen substituiertes Cyclohexyl;
R₂ H, C₁-C₄-Alkyl, Cyclohexyl oder mit 1-3 C₁-C₄-Alkylgruppen substituiertes Cyclohexyl;
R₃ C₁-C₂₀-Alkyl oder substituiertes oder unsubstituiertes Phenyl oder Naphthyl;
R₄ H, M²⁺/2, C₁-C₂₀-Alkyl oder substituiertes oder unsubstituiertes Phenyl oder Naphthyl;
M²⁺/2 ein zweiwertiges Metallkation pro zwei Phenolmoleküle und
n 1-6
bedeuten.

Bedeuten Substituenten Alkyl mit bis zu 20 Kohlenstoffatomen, so kommen hierfür die Reste wie Methyl, Ethyl, Propyl, Butyl, Pentyl, Hexyl, Octyl, Decyl, Dodecyl, Tetradecyl, Hexadecyl und Octadecyl sowie entsprechende verzweigte Isomere in Frage, bevorzugt sind C₂-C₄-Alkyl und C₁₈-Alkyl.

Als Substituenten für die Phenyl- oder Naphthyl-Reste kommen beispielsweise C₁-C₄-Alkyl-gruppen in Frage.

Als zweiwertige Metallkationen kommen Zn, Ba, Ca und Mg in Frage. Besonders bevorzugt ist Ca.

Bevorzugte Verbindungen der Formel (II) sind diejenigen, welche mindestens eine tert.-Butylgruppe als Rest R₁ oder R₂ aufweisen. Ganz besonders bevorzugt sind Verbindungen bei denen R₁ und R₂ die Bedeutung tert.-Butyl haben.

Bevorzugt bedeutet n 1 oder 2 und ganz besonders bevorzugt 1.

Ganz besonders bevorzugte sterisch gehinderte Hydroxyphenyl-alkyl-phosphonsäureester bzw. -halbester sind

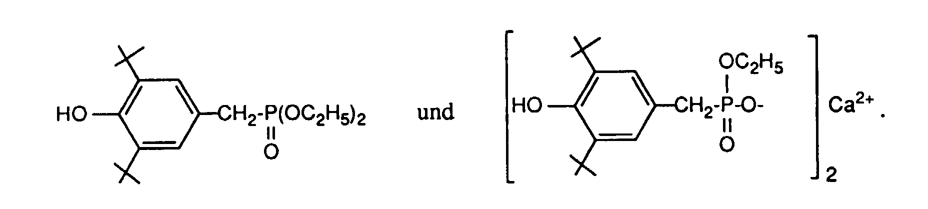

Die Durchführung des Verfahrens kann in jeglichen beheizbaren und mit einer Rührvorrichtung ausgestatteten Gefässen erfolgen. Es kann aber das Verfahren auch in einem Knetwerk, beispielsweise einer "Brabender"-Mischkammer oder in einem Extruder durchgeführt werden. Dabei ist es unerheblich, ob unter Inertgasatmosphäre (N₂) oder in Anwesenheit von Luftsauerstoff gearbeitet wird.

Das zu erhitzende Polyamidmaterial und die Mischung von Epoxid und Phenol werden üblicherweise am Anfang der Erhitzung in den Apparat eingefüllt, eine nachträgliche Dosierung der Epoxid-Phenol-Mischung zu dem Polyamid ist jedoch auch möglich. Die Erhitzung oberhalb des Schmelz- bzw. Glaspunktes wird im allgemeinen bis zu einer homogenen Verteilung der Epoxid-Phenol-Mischung unter Rühren durchgeführt. Die Temperatur richtet sich dabei nach dem verwendeten Polyamid. Bei kristallinen Polyamiden arbeitet man vorzugsweise im Bereich zwischen Schmelztemperatur und einer Temperatur etwa 50°C oberhalb der Schmelztemperatur. Bei amorphen Polyamiden erfolgt das Verfahren etwa im Bereich zwischen 50°C und 150°C oberhalb der jeweiligen Glasübergangstemperatur.

Das Epoxid und das Phenol können für die Zugabe unabhängig voneinander als Pulver, Flüssigkeit, Granulat oder in kompaktierter Form oder auch gegebenenfalls auf einem Trägermaterial, wie Kieselgel oder zusammen mit einem Polymerpulver oder Wachs, wie einem Polyethylenwachs vorliegen.

Zu je 100 Teilen Polyamid gibt man vorzugsweise 0,1 bis 10 Teile eines Epoxidharzes und 0,01 bis 5 Teile eines sterisch gehinderten Hydroxyphenyl-alkyl-phosphonsäureesters bzw. -halbesters. Besonders bevorzugt gibt man zu 100 Teilen Polyamid 0,2 bis 2,5 Teile eines Epoxidharzes und 0,05 bis 1 Teil eines sterisch gehinderten Hydroxyphenyl-alkyl-phosphonsäureesters bzw. -halbesters. Die Menge an Epoxidharz und sterisch gehindertem Hydroxyphenyl-alkyl-phosphonsäureester bzw. -halbester richtet sich dabei nach dem Ausgangsmolekulargewicht des Polymeren und nach dem gewünschten Endmolekulargewicht. So wird man bei einem stark geschädigten Polyamid, d.h. mit einem niedrigen Molekulargewicht, bevorzugt Epoxid und Phenol im oberen Gewichtsbereich einsetzen. Ist dagegen nur eine geringe Molekulargewichtserhöhung gewünscht, so wird man bevorzugt ein Epoxid und ein Phenol in niedriger Konzentration einsetzen. Weiterhin wird man sich nach der Funktionalität des verwendeten Epoxids und dem Endgruppengehalt richten, d.h. ein niedermolekulares Epoxid wird man eher in einer niedrigeren Konzentration einsetzen als ein hochmolekulares.

Zusätzlich zu der Mischung eines mehrfunktionellen Epoxidharzes und eines sterisch gehinderten Hydroxyphenyl-alkyl-phosphonsäureesters bzw. -halbesters können verschiedene Zusätze vorzugsweise Stabilisatoren dem Polyamid zugegeben werden. Diese Stabilisatoren sind dem Fachmann allgemein bekannt und werden je nach spezifischer Anforderung an das Endprodukt gewählt werden. Insbesondere können Lichtschutzmittel oder auch Antioxidantien zugesetzt werden (Gächter/Müller "Kunststoffadditive", Hanser Verlag).

Als besonders geeignet sind dabei zu erwähnen:
a) Antioxidantien wie
   die Ester von β-(3,5-Di-tert.butyl-4-hydroxyphenyl)-propionsäure und der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-iso-cyanurat, N,N'-Bis-(hydroxyethyl)-oxalsäurediamid, sowie die Amide dieser Säuren, wie z.B. N,N'-Bis-(3,5-di-tert.butyl-4-hydroxyphenylpropionyl)hexamethylendiamin, N,N'-Bis-(3,5-di-tert.butyl-4-hydroxyphenylpropionyl)-trimethylendiamin und N,N'-Bis-(3,5-di-tert.butyl-4-hydroxyphenylpropionyl)-hydrazin.
   Bevorzugt sind dabei Antioxidantien vom Typ Irganox 1098
   und Irganox 245
   vorzugsweise in Kombination mit aromatischen Phosphiten oder Phosphoniten. Beispiele für solche Phosphite oder Phosphonite sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Distearylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl-4-methylphenoxy)-2,4,8,10-tetraoxa-3,9-diphosphaspiro[5.5]undec an, 3,9-Tris-(2,4,6-tris-tert.butylphenoxy)-2,4,8,10-tetraoxa-3,9-diphosphaspiro[5,5]u ndecan und 2,2'-Ethyliden-bis-(4,6-di-tert.butylphenyl)-fluorophosphit. Besonders bevorzugt ist Irgafos 168.
b) Lichtschutzmittel wie
   1.2-(2'-Hydroxyphenyl)-benzotriazole, wie z.B. 2-(2'-Hydroxy-5'-methylphenyl)-benzotriazol, 2-(3'5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-COO(CH₂) 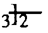 mit R = 3'-tert-Butyl-4'-hydroxy-5'-2H-benzotriazol-2-yl-phenyl.
   2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor- 1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   7. Oxalsäurediamide, wie z.B. 4,4'-Di-octyloxy-oxanilid, 2,2'-Di-ethoxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2'4-dimethylphenyl) 1,3,5-triazin.

Bevorzugt sind dabei Lichtschutzmittel aus den Klassen 1, 6 und 7 wie beispielsweise Lichtschutzmittel vom Typ Chimassorb 944, Chimassorb 119, Tinuvin 234, Tinuvin 312 oder Tinuvin 770.

Den Polyamiden können bei Bedarf übliche Kunststoffzusätze zugegeben werden, z.B. Füllstoffe und Verstärkungsmittel, insbesondere Glasfasern, Gleitmittel, Flammschutzmittel und Antistatica.

Handelt es sich bei dem Polyamid um ein Recyclat, so kann es auch gemischt mit Neumaterial oder zusammen mit Neumaterial, beispielsweise in einem Coextrusionsverfahren eingesetzt werden.

Ein weiterer Gegenstand der Erfindung ist die Verwendung einer Mischung enthaltend ein mehrfunktionelles Epoxidharz und einen sterisch gehinderten Hydroxyphenyl-alkylphosphonsäureester bzw. -halbester zur Molekulargewichtserhöhung von Polyamid und das Polyamid enthaltend die angeführten Zusätze. Die Bevorzugungen der Verwendung und des Polyamides entsprechen denen für das Verfahren.

Ein weiterer Gegenstand der Erfindung sind Mischungen enthaltend ein Polyamid, ein mehrfunktionelles Epoxidharz und einen sterisch gehinderten Hydroxyphenyl-alkyl-phosphonsäureester bzw. -halbester. Die Bevorzugungen der Mischungen entsprechen denen für das Verfahren.

Die folgenden Beispiele erläutern die Erfindung, ohne sie darauf zu beschränken. Teile und Prozente beziehen sich, wie auch in der übrigen Beschreibung, auf das Gewicht, sofern nicht anders angegeben.

Es werden die folgenden Verbindungen verwendet:
1) Polyamid 6.6 (vorgeschädigt): Ultramid® A3K der BASF AG wird künstlich geschädigt, indem das Granulat für 168 h bei 95°C in Wasser gelagert wird.
2) Polyamid 6.6: Ultramid® A3K der BASF AG.
3) Polyamid 6: Durethan® B 30 S der Bayer AG.
4) Polyamid-6 lackierter Produktionsabfall.

Die Polyamide werden vor der Versuchsdurchführung im Vakuumtrockenschrank bei etwa 100°C vorgetrocknet.

Die sterisch gehinderten Phenole sind:

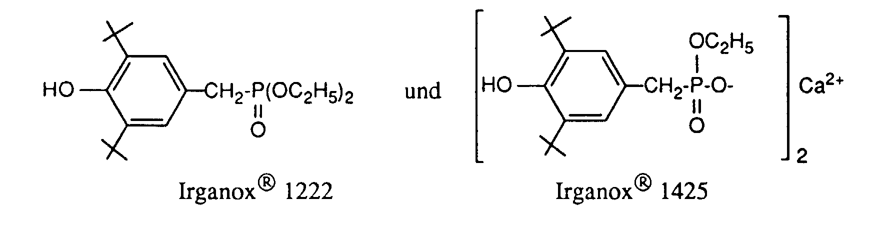

Die Epoxidharze sind:
Epoxidharz Araldit® GT 6071
   (Bisphenol-A-diglycidylether-Harz mit einer Epoxidzahl von 2,15-2,22 Eq/kg und einem Erweichungsbereicht von 70-75°C)
Epoxidharz Araldit® GT 6099
   (Bisphenol-A-diglycidylether-Harz mit einer Epoxidzahl von 0,34-0,42 Eq/kg und einem Erweichungsbereich von 143-158°C)
Epoxidharz BSG®
   Bisphenol-S-diglycidylether (4,4'-Dihydoxydiphenylsulfon-diglycidylether)
Epoxidharz Araldit® GY 281 (Bisphenol-F-diglycidylether)
Epoxidharz BBG® 4,4'-Dihydroxybiphenyldiglycidylether
Epoxidharz BFG® 9,9-Bis(4-hydroxyphenyl)fluoren-diglycidylether

### Beispiel 1-11:

In einem Glasrohr mit Rührer wird das jeweilige Polyamid-Granulat zusammen mit den Zusätzen unter einem Stickstoffstrom in einem auf 280°C erhitzten Ölbad erwärmt. Nach 10 Minuten ist die Polymermischung soweit aufgeschmolzen, dass sie gerührt werden kann. Das Gemisch wird 20 Minuten gerührt und im Anschluss dem Glasgefäss entnommen. Man bestimmt die Viskositätszahl nach DIN 53727 durch Lösen von 0,25 g des vorgetrockneten Granulats in 50 ml 96 %iger Schwefelsäure und Messung bei 25°C bzw. die reduzierte Viskosität durch Messung einer Lösung von 0,25 g des Polymeren in 100 g o-Dichlorbenzol/Phenol (1:1) bei 30°C.

**Tabelle 1:**

| Molekulargewichtserhöhung von Polyamid 6.6 (vorgeschädigt) | | | | |
|---|---|---|---|---|
| | Teile pro 100 Teile PA 6.6 gehindertes Phenol | Teile pro 100 Teile PA 6.6 Epoxidharz | red. Visk. in o-Dichlorbenzol/phenol (dl/g) | Viskositätszahl in 96% iger H₂SO₄ [ml/g] |
| Beispiel 1 | - Vergleichsbeispiel | - | 1,60 | 168 |
| 2 | 0,5 Irganox 1425 | 0,5 GT 6071 | n.b. | 178 |
| 3 | 1 Irganox 1425 | 1 GT 6071 | n.b. | 197 |
| 4 | 1 Irganox 1425 | 2 GT 6071 | 1,96 | n.b. |
| 5 | 2 Irganox 1425 | 1 GT 6071 | n.b. | 192 |
| 6 | 1 Irganox 1222 | 1 GT 6071 | n.b. | 196 |

**Tabelle 2:**

| Molekulargewichtserhöhung von Polyamid 6.6 | | | | |
|---|---|---|---|---|
| | Teile pro 100 Teile PA 6.6 gehindertes Phenol | Teile pro 100 Teile PA 6.6 Epoxidharz | red. Visk (dl/g) | Viskositätszahl [ml/g] |
| Beispiel 7 | - Vergleichsbeispiel | - | 1,80 | 181 |
| 8 | 0,5 Irganox 1425 | 0,5 GT 6071 | n.b. | 229 |
| 9 | 1 Irganox 1425 | 1 GT 6071 | 2,60 | n.b. |
| 10 | 1 Irganox 1222 | 1 GT 6071 | n.b. | 255. |
| 11 | 1 Irganox 1425 | 1 GT 6099 | n.b. | 232 |
| n.b. = nicht bestimmt | | | | |

Die Tabellen 1 und 2 zeigen einen deutlichen Anstieg der reduzierten Viskosität, welcher eine Molekulargewichtserhöhung zum Ausdruck bringt.

### Beispiele 12-23:

In einem Plasticorder der Fa. Brabender mit Mischkammer W 50 wird unter Stickstoff bei einer Temperatur von 232°C ein Polyamid 6 (Durethan® B30 S) über einen Zeitraum von 30 Minuten geknetet und das Drehmoment in Abhängigkeit von der Zeit bestimmt. Im Anschluss wird die reduzierte Viskosität und der Melt-Flow-Index gemessen. Es werden die in der Tabelle 3 angegebenen Werte bestimmt.

**Tabelle 3:**

| Molekulargewichtserhöhung von Polyamid 6 | | | | | | |
|---|---|---|---|---|---|---|
| | Teile pro 100 Teile PA 6 gehindertes Phenol | Teile pro 100 Teile PA 6 Epoxidharz | Drehmoment (N·m) nach min | | MVI 225/2,16 g/10 min | Viskositätszahl ml/g |
| | | | 10 | 30 | | |
| Bsp. 12 | Vergleichsbeispiel | - - | 3,7 | 4,0 | 23,7 | 129 |
| 13 | 1 Irganox 1425 | 1 GT 6071 | 6,6 | 9,4 | 6,0 | 137 |
| 14 | 0,5 Irganox 1425 | 1 GT 6071 | 6,9 | 9,5 | 7,0 | 145 |
| 15 | 0,25 Irganox 1425 | 1 GT 6071 | 7,0 | 9,3 | 7,7 | 143 |
| 16 | 0,25 Irganox 1425 | 2 GT 6071 | 12,8 | 13,6 | 4,2 | 138 |
| 17 | 1 Irganox 1222 | 1 GT 6071 | 7,6 | 13,5 | 5,3 | 150 |
| 18 | 0,25 Irganox 1425 | 1 GT 6071 | 7,1 | 11,0 | 5,4 | 152 |
| | 0,25 Irganox 1222 | | | | | |
| 19 | 0,5 Irganox 1425 | 1 BSG | 16,9 | 25,1 | 1,6 | 181 |

Der Anstieg des Drehmomentes und der reduzierten Viskosität, sowie die Abnahme des Melt-Flow-Index zeigen eine deutliche Molekulargewichtserhöhung bei den erfindungsgemäss behandelten Proben.

**Tabelle 4:**

| Molekulargewichtserhöhung von Polyamid 6 | | | | | | |
|---|---|---|---|---|---|---|
| Beispiel | Teile pro 100 Teile PA 6 gehindertes Phenol | Teile pro 100 Teile PA 6 Epoxidharz | Drehmoment (N·m) nach min | | MVI 225/2,16 g/10 min | Viskositätszahl ml/g |
| | | | 10 | 30 | | |
| 20 | 1 Irganox 1425 | 1 BFG | 10,6 | 13,9 | n.b. | 156 |
| 21 | 1 Irganox 1425 | 1 BBG | 17,8 | 20,0 | n.b. | 185 |
| 22 | 1 Irganox 1425 | 1 GY 281 | 18,9 | 20,5 | n.b. | 192 |
| 23 | 1 Irganox 1222 | 1 GY 281 | 22,0 | 20,4 | n.b. | 188 |

### Beispiele 24-26:

Auf einem Doppelschneckenextruder Haake Rheocord 90 wird bei 240°C mit 50 Upm Durethan B 30 S mit den angegebenen Zusätzen verarbeitet. Es werden die in der Tabelle 5 angegebenen Werte bestimmt

**Tabelle 5:**

| Molekulargewichtserhöhung von Polyamid 6 | | | |
|---|---|---|---|
| Beispiel | Teile pro 100 Teile PA 6 gehindertes Phenol | Teile pro 100 Teile PA 6 Epoxidharz | Viskositätszahl ml/g |
| 24 | ohne Zusatz | (Vergleichsbeispiel) | 131 |
| 25 | 0,25 | 1 GT 6071 | 134 |
| 26 | 0,25 | 1 GT 6071 | 135 |

### Beispiele 27-28:

Auf einem Doppelschneckenextruder Werner und Pfleiderer ZSK 25 wird bei 280°C und 100 Upm Polyamid 6.6 Ultramid A3K mit den angegebenen Zusätzen verarbeitet. Man erhält die in der Tabelle angegebenen Werte.

**Tabelle 6:**

| Molekulargewichtserhöhung von Polyamid 6.6 | | | | |
|---|---|---|---|---|
| Beispiel | Teile pro 100 Teile PA 6 gehindertes Phenol | Teile pro 100 Teile PA 6 Epoxidharz | red. Viskosität (dl/g) | MVI 275/2,16 [g/10 min] |
| 27 | ohne Zusatz | (Vergleichsbeispiel) | 1,40 | 80 |
| 28 | 0,1 Irganox 1425 | 2 GT 6071 | 1,60 | 21 |

### Beispiele 29-36:

Auf einem Doppelschneckenextruder Werner und Pfleiderer ZSK 25 wird bei 240°C und 100 Upm Polyamid 6 Durethan B 30 S mit den angegebenen Zusätzen verarbeitet. Es werden die in der Tabelle angegebenen Werte bestimmt.

**Tabelle 7:**

| Molekulargewichtserhöhung von Polyamid 6 | | | | |
|---|---|---|---|---|
| Beispiel | Teile pro 100 Teile PA 6 gehindertes Phenol | Teile pro 100 Teile PA 6 Epoxidharz | MVI 225/2,16 g/10 min | red. Viskosität (dl/g) |
| 29 | ohne Zusatz | (Vergleichsbeispiel) | 15,0 | 1,32 |
| 30 | 0,25 Irganox 1425 | 0,25 GT 6071 | 13,8 | 1,40 |
| 31 | 0,25 Irganox 1425 | 0,50 GT 6071 | 12,0 | 1,44 |
| 32 | 0,50 Irganox 1425 | 0,50 GT 6071 | 10,6 | 1,48 |
| 33 | 1,00 irganox 1425 | 1,00 GT 6071 | 11,0 | 1,56 |
| 34 | 0,05 Irganox 1425 | 2,00 GT 6071 | 6,1 | n.b. |
| 35 | 0,10 Irganox 1425 | 2,00 GT 6071 | 3,5 | 1,64 |
| 36 | 0,25 Irganox 1425 | 2,00 GT 6071 | 4,8 | 1,64 |

### Beispiele 37-40:

In einem Plasticorder der Fa. Brabender mit Mischkammer W 50 wird unter Stickstoff bei einer Temperatur von 228°C ein Polyamid 6 Produktionsabfall (aus der Herstellung von lackierten Radzierblenden, ca. 25% Glasfaseranteil) geknetet. Es werden die folgenden Werte bestimmt:

**Tabelle 8:**

| Molekulargewichtserhöhung von Polyamid 6 Produktionsabfall | | | | | | |
|---|---|---|---|---|---|---|
| Beispiel | Teile pro 100 Teile PA 6 gehindertes Phenol | Teile pro 100 Teile PA 6 Epoxidharz | Drehmoment (N·m) nach min | | | red. Viskosität [dl/g] |
| | | | 10 | 20 | 30 | |
| 37 | ohne Zusatz | (Vergleichsbeispiel) | 7,9 | 7,3 | 6,6 | 1,00 |
| 38 | 1 Irganox 1425 | 1 GY 281 | 30,8 | 26,9 | 23,6 | 1,56 |
| 39 | 1 Irganox 1425 | 1 GT 6071 | 17,0 | 18,0 | 16,7 | 1,28 |
| 40 | 1 Irganox 1425 | 1 GT 6071 | 19,4 | 18,2 | 15,9 | 1,28 |

### Beispiele 41 und 42:

Auf einem Doppelschneckenextruder Werner und Pfleiderer ZSK 25 wird bei 240°C und 100 Upm Polyamid 6 Produktionsabfall (aus der Herstellung von lackierten Radzierblenden, ca. 25% Glasfasergehalt) mit den angegebenen Zusätzen verarbeitet. Es werden die in der Tabelle angegebenen Werte bestimmt.

**Tabelle 9:**

| Molekulargewichtserhöhung von Polyamid (Produktionsabfall) | | | | |
|---|---|---|---|---|
| Beispiel | Teile pro 100 Teile PA 6 gehindertes Phenol | Teile pro 100 Teile PA 6 Epoxidharz | MVI 225/2,16 g/10 min | red. Viskosität (dl/g) |
| 41 | ohne Zusatz | (Vergleichsbeispiel) | 7,9 | 1,08 |
| 42 | 0,25 Irganox 1425 | 0,25 GT 6071 | 1,5 | 1,36 |

## Patentansprüche

1. Verfahren zur Molekulargewichtserhöhung von Polyamiden, dadurch gekennzeichnet, dass man ein Polyamid unter Zusatz eines mehrfunktionellen Epoxidharzes und eines sterisch gehinderten Hydroxyphenyl-alkyl-phosphonsäureesters bzw. -halbesters oberhalb des Schmelzpunktes (Glaspunktes) des Polyamids erhitzt.

2. Verfahren gemäss Anspruch 1, dadurch gekennzeichnet, dass man ein Polyamid-Recyclat, beispielsweise von Produktionsabfällen, Wertstoffsammlungen oder Rücknahmeverpflichtungen, einsetzt.

3. Verfahren gemäss Anspruch 1, dadurch gekennzeichnet, dass das mehrfunktionelle Epoxidharz ein aromatisches Epoxidharz mit 2, 3 oder 4 Glycidylgruppen ist.

4. Verfahren gemäss Anspruch 1, dadurch gekennzeichnet, dass das mehrfunktionelle Epoxidharz ein Diglycidylether auf der Basis von Bisphenolen, ausgewählt aus2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F), 4,4'-Dihydroxybiphenyl oder 9,9-Bis(4-hydroxyphenyl)fluoren ist.

5. Verfahren gemäss Anspruch 1, dadurch gekennzeichnet, dass der sterisch gehinderte Hydroxyphenyl-alkyl-phosphonsäureester bzw. -halbester der Formel 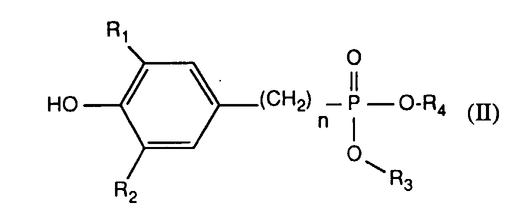 entspricht, worin
R₁ iso-Propyl, tert.-Butyl, Cyclohexyl oder mit 1-3 C₁-C₄-Alkylgruppen substituiertes Cyclohexyl;
R₂ H, C₁-C₄-Alkyl, Cyclohexyl oder mit 1-3 C₁-C₄-Alkylgruppen substituiertes Cyclohexyl;
R₃ C₁-C₂₀-Alkyl oder substituiertes oder unsubstituiertes Phenyl oder Naphthyl;
R⁴ H, M²⁺/2, C₁-C₂₀-Alkyl oder substituiertes oder unsubstituiertes Phenyl oder Naphthyl;
M²⁺/2 ein zweiwertiges Metallkation pro zwei Phenolmoleküle und
n 1-6
bedeuten.

6. Verfahren gemäss Anspruch 1, dadurch gekennzeichnet, dass der sterisch gehinderte Hydroxyphenyl-alkyl-phosphonsäureester bzw. -halbester eine Verbindung der Formel

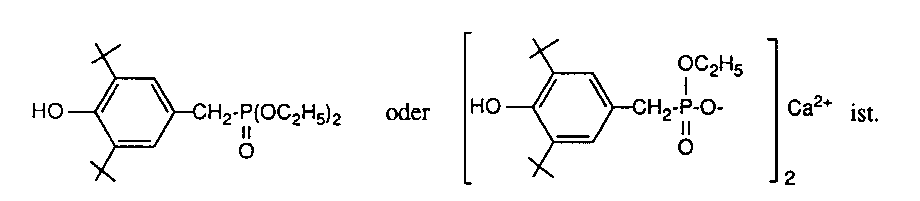

7. Verfahren gemäss Anspruch 1, dadurch gekennzeichnet, dass man 0,1 bis 10 Teile des mehrfunktionellen Epoxidharzes und 0,01 bis 5 Teile des sterisch gehinderten Hydroxyphenyl-alkyl-phosphonsäureesters bzw. -halbesters je 100 Teile Polyamid verwendet.

8. Verfahren gemäss Anspruch 1, dadurch gekennzeichnet, dass man 0,2 bis 2,5 Teile des mehrfunktionellen Epoxidharzes und 0,05 bis 1 Teil des sterisch gehinderten Hydroxyphenyl-alkyl-phosphonsäureesters bzw. -halbesters je 100 Teile Polyamid verwendet.

9. Verfahren gemäss Anspruch 1, dadurch gekennzeichnet, dass man als Polyamid Polyamid-6 oder Polyamid-6.6 oder Mischungen davon einsetzt.

10. Verwendung einer Mischung enthaltend ein mehrfunktionelles Epoxidharz und einen sterisch gehinderten Hydroxyphenyl-alkyl-phosphonsäureester bzw. -halbester zur Molekulargewichtserhöhung von Polyamid.

11. Mischung enthaltend ein mehrfunktionelles Epoxidharz, einen sterisch gehinderten Hydroxyphenyl-alkyl-phosphonsäureester bzw. -halbester und ein Polyamid.

12. Mischung enthaltend ein mehrfunktionelles Epoxidharz, einen sterisch gehinderten Hydroxyphenyl-alkyl-phosphonsäureester bzw. -halbester und ein Polyamid-Recyclat oder ein thermisch und/oder hydrolytisch vorgeschädigtes Polyamid.

13. Polyamid enthaltend ein mehrfunktionelles Epoxidharz und einen sterisch gehinderten Hydroxyphenyl-alkyl-phosphonsäureester bzw. -halbester.

14. Polyamid-Recyclat enthaltend ein mehrfunktionelles Epoxidharz und einen sterisch gehinderten Hydroxyphenyl-alkyl-phosphonsäureester bzw. -halbester.

## Claims

1. A process for increasing the molecular weight of polyamides, which comprises heating a polyamide, with addition of a polyfunctional epoxy resin and a sterically hindered hydroxyphenylalkylphosphonic acid ester or half-ester, to above the melting point (glass transition temperature) of the polyamide.

2. A process according to claim 1, which comprises using a polyamide recyclate from, for example, production waste, useful material collections or takeback schemes.

3. A process according to claim 1, wherein the polyfunctional epoxy resin is an aromatic epoxy resin containing 2, 3 or 4 glycidyl groups.

4. A process according to claim 1, wherein the polyfunctional epoxy resin is a diglycidyl ether based on bisphenols selected from 2,2-bis(4-hydroxyphenyl)propane (bisphenol A), bis (4-hydroxyphenyl)methane or mixtures of bis(ortho-/para-hydroxyphenyl)methane (bisphenol F), 4,4'-dihydroxybiphenyl or 9,9-bis(4-hydroxyphenyl)fluorene.

5. A process according to claim 1, wherein the sterically hindered hydroxyphenylalkylphosphonic acid ester or half-ester corresponds to the formula 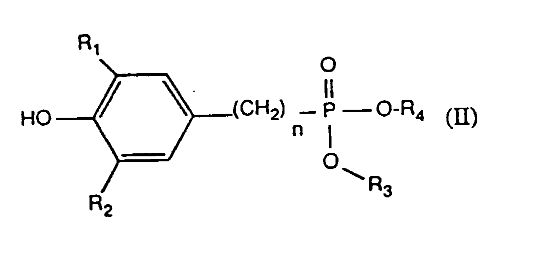 wherein
R₁ is isopropyl, tert-butyl, cyclohexyl or cyclohexyl substituted by to 3 C₁-C₄alkyl groups;
R₂ is H, C₁-C₄alkyl, cyclohexyl or cyclohexyl substituted by to 3 C₁-C₄alkyl groups;
R₃ is C₁-C₂₀alkyl or substituted or unsubstituted phenyl or naphthyl;
R₄ is H, M²⁺/2, C₁-C₂₀alkyl or substituted or unsubstituted phenyl or naphthyl;
M²⁺/2 is a divalent metal cation per two phenol molecules, and n is 1 to 6.

6. A process according to claim 1, wherein the sterically hindered hydroxyphenylalkylphosphonic acid ester or half-ester is a compound of the formula

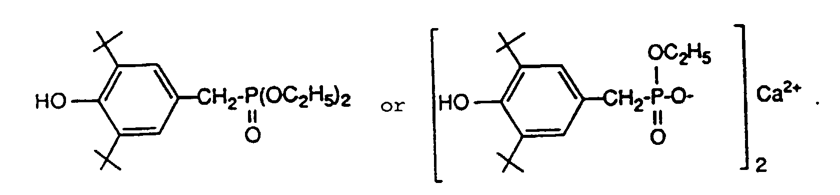

7. A process according to claim 1, wherein from 0.1 to 10 parts of the polyfunctional epoxy resin and 0.01 to 5 parts of the sterically hindered hydroxyphenylalkylphosphonic acid ester or half-ester are used per 100 parts of polyamide.

8. A process according to claim 1, wherein from 0.2 to 2.5 parts of the polyfunctional epoxy resin and 0.05 to 1 part of the sterically hindered hydroxyphenylalkylphosphonic acid ester or half-ester are used per 100 parts of polyamide.

9. A process according to claim 1, wherein the polyamide used is polyamide 6, polyamide 66 or a mixture thereof.

10. The use of a mixture comprising a polyfunctional epoxy resin and a sterically hindered hydroxyphenylalkylphosphonic acid ester or half-ester for increasing the molecular weight of polyamide.

11. A mixture comprising a polyfunctional epoxy resin, a sterically hindered hydroxyphenylalkylphosphonic acid ester or half-ester and a polyamide.

12. A mixture comprising a polyfunctional epoxy resin, a sterically hindered hydroxyphenylalkylphosphonic acid ester or half-ester and a polyamide recyclate or a previously thermally and/or hydrolytically damaged polyamide.

13. A polyamide comprising a polyfunctional epoxy resin and a sterically hindered hydroxyphenylalkylphosphonic acid ester or half-ester.

14. A polyamide recyclate comprising a polyfunctional epoxy resin and a sterically hindered hydroxyphenylalkylphosphonic acid ester or half-ester.

## Revendications

1. Procédé pour l'augmentation du poids moléculaire de polyamides, caractérisé en ce que l'on chauffe un polyamide en ajoutant une résine époxyde multifonctionnelle et un hémi-ester, respectivement un ester de l'acide hydroxyphényl-alkyl-phosphonique à encombrement stérique, à une température supérieure au point de fusion (point de transition vitreuse) du polyamide.

2. Procédé selon la revendication 1, caractérisé en ce que l'on utilise un polyamide à recycler, par exemple des déchets de production, de la collecte de matières utiles ou provenant de l'obligation de reprise.

3. Procédé selon la revendication 1, caractérisé en ce que la résine époxyde multifonctionnelle est une résine époxyde aromatique avec 2, 3 ou 4 groupes glycidyle.

4. Procédé selon la revendication 1, caractérisé en ce que la résine époxyde multifonctionnelle est un éther diglycidylique à base de bisphénols, choisi parmi le 2,2-bis-(4-hydroxyphényl)-propane (Bisphénol A), le bis-(4-hydroxyphényl)-méthane ou des mélanges de bis-(ortho/para-hydroxyphényl) -méthane (Bisphénol F), le 4,4'-dihydroxyhiphényle ou le 9,9-bis-(4-hydroxyphényl)-fluorène.

5. Procédé selon la revendication 1, caractérisé en ce que l'hémi-ester, respectivement l'ester de l'acide hydroxyphényl-alkyl-phosphonique à encombrement stérique répond à la formule : 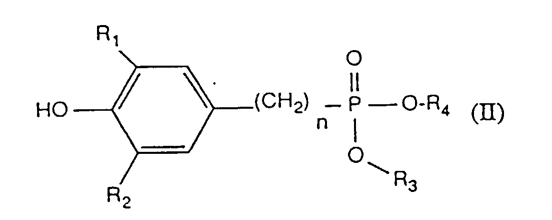 où
R₁ représente isopropyle, tert-butyle, cyclohexyle ou cyclohexyle substitué par un à trois groupes alkyle en C₁-C₄ ;
R₂ représente H, alkyle en C₁-C₄, cyclohexyle ou cyclohexyle substitué par un à trois groupes alkyle en C₁-C₄ ;
R₃ représente alkyle en C₁-C₂₀ ou naphtyle ou phényle non substitué ou substitué ;
R₄ représente M²⁺/2, alkyle en C₁-C₂₀ ou naphtyle ou phényle non substitué ou substitué ;
M²⁺/2 représente un cation de métal bivalent pour deux molécules de phénol et
n va de 1 à 6.

6. Procédé selon la revendication 1, caractérisé en ce que l'hémi-ester, respectivement l'ester de l'acide hydroxyphényl-alkyl-phosphonique à encombrement stérique est un composé de formule

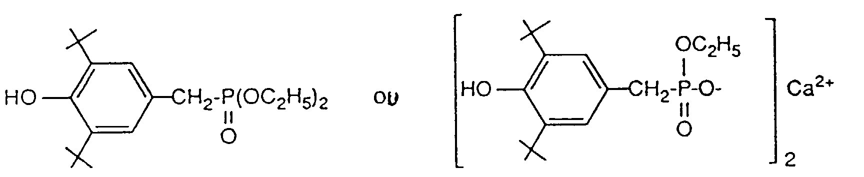

7. Procédé selon la revendication 1, caractérisé en ce que l'on utilise de 0,1 à 10 parties de la résine époxyde multifonctionnelle et de 0,01 à 5 parties de l'hémi-ester, respectivement de l'ester de l'acide hydroxyphényl-alkyl-phosphonique à encombrement stérique pour 100 parties de polyamide.

8. Procédé selon la revendication 1, caractérisé en ce que l'on utilise de 0,2 à 2,5 parties de la résine époxyde multifonctionnelle et de 0,05 à 1 partie de l'hémi-ester, respectivement de l'ester de l'acide hydroxyphényl-alkyl-phosphonique à encombrement stérique pour 100 parties de polyamide.

9. Procédé selon la revendication 1, caractérisé en ce que l'on utilise en tant que polyamide le polyamide 6 ou le polyamide 6.6 ou leurs mélanges.

10. Utilisation d'un mélange contenant une résine époxyde multifonctionnelle et un hémi-ester, respectivement ester de l'acide hydroxyphényl-alkyl-phosphonique à encombrement stérique pour l'augmentation du poids moléculaire du polyamide.

11. Mélange contenant une résine époxyde multifonctionnelle, un hémi-ester, respectivement un ester de l'acide hydroxyphényl-alkyl-phosphonique à encombrement stérique et un polyamide.

12. Mélange contenant une résine époxyde multifonctionnelle, un hémi-ester, respectivement un ester de l'acide hydroxyphényl-alkyl-phosphonique à encombrement stérique et un polyamide à recycler ou un polyamide endommagé préalablement par la chaleur et/ou par hydrolyse.

13. Polyamide contenant une résine époxyde multifonctionnelle et un hémi-ester, respectivement un ester de l'acide hydroxyphényl-alkyl-phosphonique à encombrement stérique.

14. Polyamide à recycler contenant une résine époxyde multifonctionnelle et un hémi-ester, respectivement un ester de l'acide hydroxyphényl-alkyl-phosphonique à encombrement stérique.
